# EUROPEAN PATENT APPLICATION

(11) **EP 1 804 206 A1**
(43) Date of publication of application: **04.07.2007**
(21) Application number: 06024433.2
(22) Date of filing: 24.11.2006
(51) Int. Cl.: G06Q 10/00

(54) **Method for monitoring and controlling the construction of an engineering project**

(30) Priority: 28.11.2005 IL 17220805
(71) Applicant: Bniya & Internet Ltd., Tel-Aviv 61132 (IL); Sagy, Alexander, Omer 84965 (IL)
(72) Inventor: Sagy, Alexander, Omer 84965 (IL)
(74) Representative: Frauenknecht, Alois J.

(57) **Abstract**

There is provided a method for monitoring and controlling the construction of an engineering project, including dividing the construction of the engineering project into the construction of project segments arranged in order, each project segment representing a necessary stage in carrying out the complete construction of the engineering project, determining the type of tests which have to be performed on each project segment construction, during and after completion thereof, before proceeding to the next project segment, dividing the planned project segment structure into batches of performances to be executed, wherein each batch is defined by the type and amount of tests which must be carried out thereon, constructing the first project segment, performing the tests on the batches, and basing the advancement of the project construction into the next project segment construction on the results of the check lists and tests obtained for each batch of operation.

## Description

### Field of the Invention

The present invention relates to a method for monitoring and controlling the construction of engineering projects.

### Background of the Invention

Engineering projects such as construction of roads, buildings, bridges, tunnels, are becoming more and more complicated with the advancement of progress and technology. The requirements for quality, in every respect, are increasing, along with expectations of shortened schedules and economic competition.

The variety of products, as well as their availability world-wide, is increasing, while the location of planning and advisory offices extends over various continents. In the world of planning and engineering, expertise and professionalism are required on the one hand, and on the other, the field has been opened to international competition as a result of the ease of communication, the lower cost of sea and air transport, and manufacturing in various countries according to plans and standards from other continents. The number of standards and detailed plans is increasing, as are the size and scope of projects. The supervisor in situ should therefore be provided with on-line information and data, the failure to provide such up-dated information and data could be detrimental to the entire project.

Present methods of projects monitoring and control suffer from the following shortcomings:
1. A lack of integration between the documentary system and the project location on site, in addition to relating to management elements, including quantities, reports and time schedules and their relationship to the quality system, including quick inspection lists, check lists, standards and specifications related to plans and management, as defined in the introduction above.
2. The defined inspection program does not absolutely relate to the locations, as well as other details concerning the project and specific relation to plans, standards and required tests of the project.
3. Ordering of the inspections, supervision of check lists, carrying out of various measurements or the sending of samples to laboratories, are generally verified orally and not documented, and they are not related to the location and situation in a manner which can be identified and controlled.
4. Actual carrying out of inspections on site, as well as their approval procedure and the carrying out of laboratory inspections, is not immediate and clear. As a result, immediate coordination between the contractor, supervisor, tools and various staffs involved is prevented or detained.
5. Measurement and checklist approvals, which are sometimes conditions for inspection, do not appear in a manner enabling control by the various entities simultaneously, such as the project planning manager, surveyor, quality control, and the like. This situation allows the exploitation of a lack of immediate, updated information by various entities.
6. Follow-up of problematic locations that did not pass inspection and the like, as well as the procedure and implementation of re-inspections, is not clear and apparent, and sometimes, because of the time that has passed, cannot be reconstructed and their cost cannot be charged, as required.
7. Recording the up-dated standards of location in inspection certificates requires high expertise from entities on site, which frequently does not exist.
8. There is no immediate, reliable connection between quantity reports that have been carried out and the quantity and quality inspections made. Therefore, it is not possible to approve and pay for quantities that are not inspected by quality control at all, or at the appropriate level.
9. The time schedules are not connected to the quality assurance and control systems.
10. There is no direct connection between the quality of performance, the quantities ordered and used, the required budget and the timetable.
11. The work procedure can continue without an immediate warning also when a stage has not been carried out, or has been incorrectly carried out.
12. The present method of project monitoring is not sufficiently industrialized, as required especially for complicated projects.

The above-described situation, with regard to possibilities and requirements, has not yet caused a corresponding revolution in the inner procedures of planning, management and organization of engineering projects. In spite of the wide circle of engineers, contractors, plants, inspection agencies, product suppliers, and the like, the methods of communication and management operate, to a great extent, in the same manner in which they operated in the distant past.

The fields of activity in an engineering project are divided into a number of "departments":
a) planning - plans, specifications, measurements;
b) implementation - follow-up of quantities, schedules, supervision;
c) management - control and follow-up, quality control;
d) maintenance - building of tools and procedures for maintaining the structure, and
e) survey, inspection, documentation.

These various activities are often conducted under conditions of geographic dispersion, lengths of time, implementation at the field level and also in depth and height, and they are carried out at various stages and at different locations by many entities operating as organizations and individuals, under different communication systems and contracts, sometimes as a hierarchical structure and sometimes as a matrix structure, when, in the end, a single product, having the qualities of endurance and the ability to be operated and used by many entities for a long time, is needed.

The above-described situation presents the following problems for an engineering project:
1. Planning by many entities, who must be coordinated with each other on the one hand, each of which must always operate on the basis of, and/or in connection with, the others.
2. Coordination requirements, and inner and external organizational approval at various stages of the project, sometimes during the implementation of certain stages, during the planning of these stages.
3. During implementation, changes are requested in elements of the plan without updating between the planners and/or with the implementation and supervisory entities.
4. Various conditions at the site require immediate changes of plan, including changes as a result of a change in effect, inspection, or changes in the schedule.
5. Various problems that arise in the field which must receive an immediate planning or statutory solution, the conclusions of which must be entered into the system for management and budgetary follow-up.
6. Changes in the schedules in different departments during the stages of planning and implementation which influence those of the others, without immediate warning or follow-up.
7. Reports in the inner organizational systems are not available to the other entities involved, and cause a waste of resources and double work, both in planning and in implementation.
8. The subject of inspection for the purpose of meeting requirements is the joint responsibility of the implementation, supervision and planning departments.
   The physical dispersion (plants, suppliers, manufacturers), at the project site level and at the planning office location, the inspection apparatus, the sources of materials and equipment, make coordination of the job difficult and cause difficulties and the loss of time during the various procedures.
9. The awkwardness and distance are sometimes exploited to the detriment of the project by various entities, as a result of lack of control.
10. There is no system that immediately stops the project when a change occurs, or when the project does not fulfill the requirements.
11. The necessity to carry out thousands of inspections in various fields and places and with relation to a number of entities in the inspection and approval systems, makes the whole project difficult and causes higher costs, loss of time, mistakes in reporting and human errors that influence the quality of the results. The necessity to file and save all of the relevant papers and the obligation to maintain information and its handling, are placed upon many entities having different levels of jurisdiction who must relate to the results, who are sometimes distant from the site and from each other.
12. The necessity to govern the components of the project at their various locations, including inspection of the materials themselves, as well as the details of various systems, requires coping with distance and time, including the management of charts and results at the various locations and relating them to the specifications and standards.
   It is very difficult to provide a suitable response to this requirement, because of the great amount of information coming from different locations, at different times, and the requirement to save and retrieve it.
13. The definitions by which the site supervisor is supposed to operate exist in the standards and specifications, but they do not relate to a specific location on site, as required and it is rather complicated to retrieve the specific data and information.

### Disclosure of the Invention

It is therefore a broad object of the present invention to provide a method for monitoring and controlling the construction of an engineering project for establishing an operational link between the batches of performance, the quality of performance, control of timetables and budgets.

In accordance with the present invention there is therefore provided a method for monitoring and controlling the construction of an engineering project, comprising dividing the construction of the engineering project into the construction of project segments arranged in order, each project segment representing a necessary stage in carrying out the complete construction of the engineering project, determining the type of tests which have to be performed on each project segment construction, during and after completion thereof, before proceeding to the next project segment, dividing the planned project segment structure into batches of performances to be executed, wherein each batch is defined by the type and amount of tests which must be carried out thereon, constructing the first project segment, performing the tests on said batches, and basing the advancement of the project construction into the next project segment construction on the results of the check lists and tests obtained for each batch of operation.

The invention further provides a method for monitoring and controlling the construction of an engineering project, comprising dividing the construction of the engineering project into the construction of project segments arranged in order, each project segment representing a necessary stage in carrying out the complete construction of the engineering project, determining the type of tests which have to be performed on each project segment construction, during and after completion thereof, before proceeding to the next project segment, dividing the planned project segment structure into batches of performances to be executed, wherein each batch is defined by the type and amount of tests which must be carried out thereon, constructing the first project segment, performing the tests on said batches, and basing the advancement of the project construction into the next project segment construction on the results of the tests obtained for each batch of operation, whereby there is established an operational link between the batches of performance, the quality of performance, control of timetables and budgets.

The subject system and method are intended to operate at all stages of a project, from its inception as an initiative idea to its planning, implementation, delivery and maintenance.

The system and method are optionally, advantageously based on Internet activity that allows cooperative information from various locations at different entry times, in a single information system that absorbs the requirements at a basic information level and provides reports and background information, such as standards, maps, names, and the like.

The names of the users are defined in the system, as well as their tasks and the permits that determine what they are allowed to see, to whom they may report, and what requires authorization, and from whom.

### Brief Description of the Drawings

The invention will now be described in connection with certain preferred embodiments with reference to the following illustrative figures, so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1 is a schematic representation of the characterizing features of the method according to the present invention, and
Fig. 2 is a more detailed schematic representation of the characterizing features of the method according to the present invention.

### Detailed Description of Preferred Embodiments

The method for monitoring and controlling the construction of an engineering project, such as the construction of roads, buildings, ridges, tunnels, according to the present invention, commences with the planning stage. This stage obviously basically differs from project to project, as per-se known. In the above engineering examples, all such projects require different building activities such as digging and earth removal, building of foundations, building of a skeleton of a structure, completing the outside facing of the structure, etc. These different activities will be referred to herein as engineering project segments which usually and basically require different experties and must be uniquely approached in all aspects. Hence, a specific project is sub-divided into suitably arranged project segments, while assigning to each project segment a timetable for commencing and completing the project. Obviously, a project segment may commence before the completion of one or more previous project segments. Each project segment is analyzed to determine the type and amount of tests which it must undergo in order to meet predetermined standards as a precondition to proceed to the next stage and/or be certified by an authorized officer.

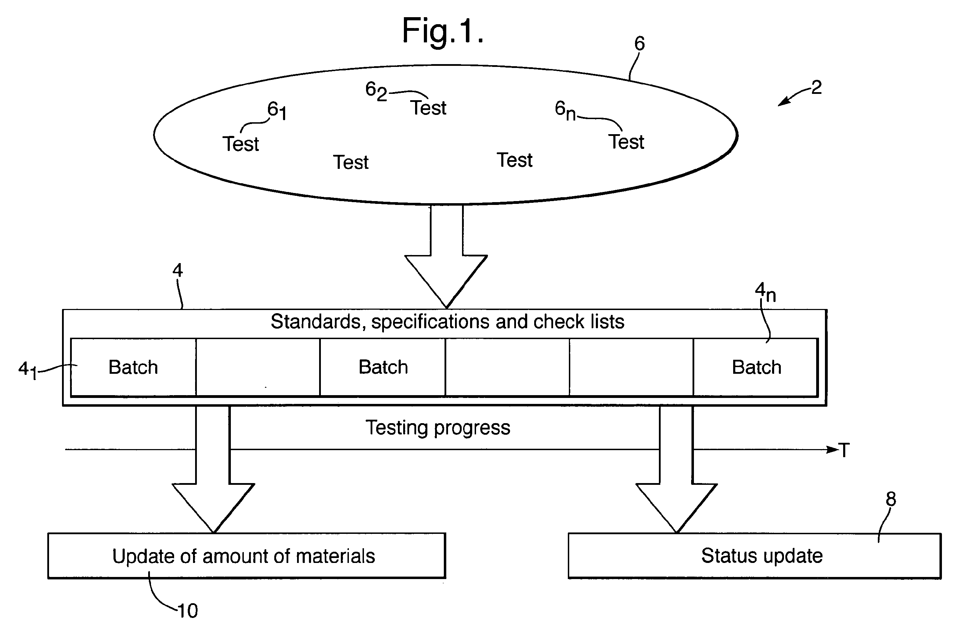

Referring to Fig. 1 there is shown a planned project segment structure 2 divided into batches of performances 4 to 4ₙ to be executed, wherein each batch is defined by the type and amount of tests 6, composed of identical or different types of tests 6 to 6ₙ, which must be carried out thereon in order to meet required standards. The term "tests" includes examination of compliance with standards, specifications and check lists, as well as tests carried out in laboratories. These batches now constitute the "building blocks" or entities for monitoring and controlling the entire project on the basis of which the project is governed. In other words, the actual state of implementation 8 of a batch 4 (prior to and after implementation) in a project segment at a certain time along the timetable scale of the entire project, is entered in the system and will govern, inter-alia, the projected timetable of the project, the amount of construction materials 10 which must be periodically ordered in accordance with the construction's progress, the required budget at a specific time and payments to be made at specific times to individual sub-contractors, based on completion of stages of the work and the approval by an authorized officer.

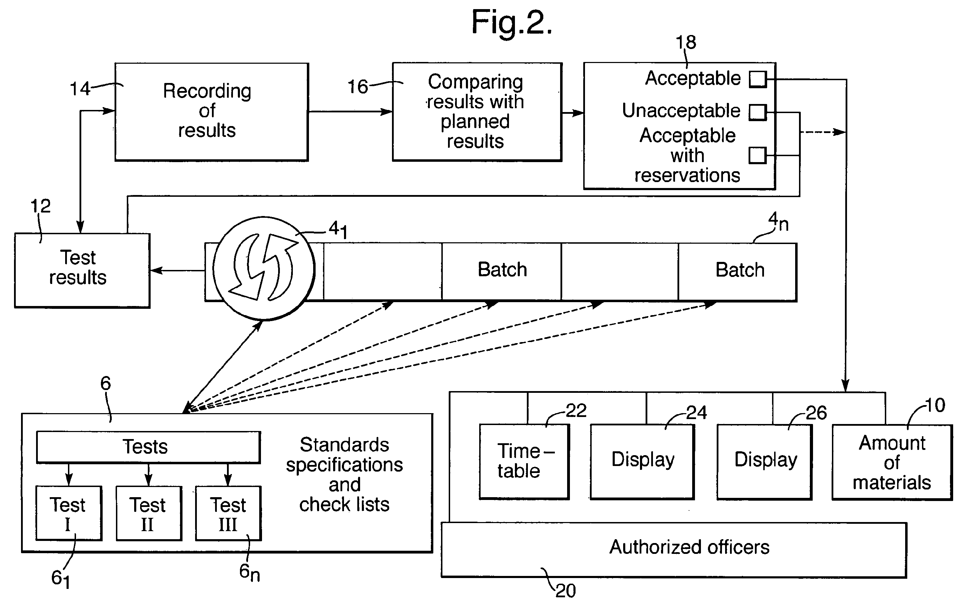

Fig. 2 more specifically schematically illustrates the method of reporting progress concerning the batches 4 to 4ₙ. As seen, the prescribed tests 6 to 6ₙ are performed on each batch and the results are fed to block 12 which represents a database for receiving updated data and information concerning the state of tests performed according to standards, detailed specifications and check lists. The test results, which include the examination of compliance with standards, specifications and check lists are recorded at 14 to be compared, at 16, with prerequisite results as originally entered into the system. The outcome of the comparison is provided at 18 categorizing the results into three classes: "acceptable", "unacceptable" and "acceptable with reservations". If the results are acceptable, the information is then passed on at 20 to the authorized officers concerned, while updating the data concerning the amount of materials 10 which were ordered at certain times, updated timetables 22 of the entire system and graphical displays 24, 26 of the updated project, as required, so that all entities involved in the project can be updated almost on-line. Should the test results be unacceptable or acceptable with reservations, this information is passed through line 28 to block 12, where the officers in charge of the test results will decide how to proceed, including ordering repetition of all or part of the tests. This information may also be passed on to the authorized officer of higher rank at 20 for updating the system.

There are several advantages of the above-described method:
1. Creation of an integration connection between the G.I.S. site, the definition of cross-sections and layers in the plans, with the document management, implementation management (quantities, activities, problems, etc.), budgeting and inspection systems and tests, in combination with surveys and maintenance.
2. Entry into the program for every layer or project segment in the site, at its correct level and location, before the beginning of the implementation, sharpens and approves a direct connection between the characterized, specific location and its quality requirements and standards, together with the possibility of comparing the results to the requirements. It does not allow immediate report to the proper authority and inspection where quality criteria and standards have not been defined, thus preventing work without quality criteria.
3. Documented and immediate reporting of inspection order (simultaneous implementation in the entire system). This report, in the system is important with regard to three aspects: the time of the order or report, by whom the order was made (after approval, etc.), and where exactly, including documentation of all of the above. The exactness of these three elements constitutes an upgrading of the verity of the above activity.
4. Written report of an inspection that was made, indicating the exact location and time, is immediately provided to all of the relevant entities in the system.
5. Immediate, obligatory connection between checklists and inspections, prevents inspections at a site or under conditions that are not sufficiently prepared, while creating a connection between the location, time and responsibility.
6. Automatic guiding of a documented request for global inspections, including jurisdictions and responsibilities for decisions, documents and handles the procedure.
7. Automatically stopping the work procedure by providing notices to the officers concerned at locations where the inspections were not passed, by preventing the possibility of proceeding unless the entity qualified to do so assumes responsibility.
8. Immediate, clear connection between inspections that were successfully carried out, the amount of work done, and the time schedule, compared to those planned.
9. Automatic management of inspection budget by the ordering entity by determining a reliable format and operation of a procedure relating to same within the inspection implementation procedure.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A method for monitoring and controlling the construction of an engineering project, comprising:
dividing the construction of the engineering project into the construction of project segments arranged in order, each project segment representing a necessary stage in carrying out the complete construction of the engineering project;
determining the type of tests which have to be performed on each project segment construction, during and after completion thereof, before proceeding to the next project segment;
dividing the planned project segment structure into batches of performances to be executed, wherein each batch is defined by the type and amount of tests which must be carried out thereon;
constructing the first project segment;
performing the tests on said batches, and
basing the advancement of the project construction into the next project segment construction on the results of the check lists and tests obtained for each batch of operation.

2. The method as claimed in claim 1, wherein the construction of each batch of performance in each project segment is limited by time.

3. The method as claimed in claim 1, wherein the tests which must be carried out on each batch of performance, are limited by time.

4. The method as claimed in claim 1, further comprising assigning a timetable for commencing and completing the construction of each project segment.

5. The method as claimed in claim 4, further comprising adjusting said timetable in accordance with the results of said tests.

6. The method as claimed in claim 1, wherein said tests are performed consecutively on batches upon being completed.

7. The method as claimed in claim 1, wherein the results of said tests are forwarded to one or more authorities for initiating the next step.

8. The method as claimed in claim 1, further comprising calculating the quantities of material required for constructing a batch.

9. The method as claimed in claim 8, further comprising calculating the cost for constructing each batch.

10. The method as claimed in claim 1, further comprising initiating payments to constructors upon authorizing satisfactory work performed.

11. The method as claimed in claim 1, wherein information and data relating to the engineering project is entered into and available to authorized people on the Internet.

12. A method for monitoring and controlling the construction of an engineering project, comprising:
dividing the construction of the engineering project into the construction of project segments arranged in order, each project segment representing a necessary stage in carrying out the complete construction of the engineering project;
determining the type of tests which have to be performed on each project segment construction, during and after completion thereof, before proceeding to the next project segment;
dividing the planned project segment structure into batches of performances to be executed, wherein each batch is defined by the type and amount of tests which must be carried out thereon;
constructing the first project segment;
performing the tests on said batches, and
basing the advancement of the project construction into the next project segment construction on the results of the tests obtained for each batch of operation, whereby there is established an operational link between the batches of performance, the quality of performance, control of timetables and budgets.
